# EUROPEAN PATENT SPECIFICATION

(11) **EP 1 439 752 B1**
(45) Date of publication and mention of the grant of the patent: **24.08.2005**
(21) Application number: 02777610.3
(22) Date of filing: 21.10.2002
(51) Int. Cl.: A01N 25/34, A01N 25/10

(54) **TREATMENT OF FABRIC MATERIALS WITH AN INSECTICIDE**
BEHANDLUNG VON GEWEBEN MIT EINEM INSEKTIZID
TRAITEMENT D'UNE MATIERE TEXTILE AU MOYEN D'UN INSECTICIDE

(30) Priority: 25.10.2001 ZA 200108812
(43) Date of publication of application: 28.07.2004
(73) Proprietor: Siamdutch Mosquito Netting Company Limited, 10110 Bangkok (TH)
(72) Inventor: BAECKER, Albin, Alexander, Wladyslaw, 3630 Westville (ZA)
(74) Representative: Minderop, Ralph H.
(86) International application number: PCT/IB2002/004327
(87) International publication number: WO 2003/034823

(56) References cited:
- GB-A- 2 202 243
- US-A- 4 623 540
- DATABASE WPI Section Ch, Week 198610 Derwent Publications Ltd., London, GB; Class A97, AN 1986-064917 XP002227352 & JP 61 015801 A (YAMANAN GOSEI KAGAK), 23 January 1986 (1986-01-23)
- DATABASE CA [Online] CHEMICAL ABSTRACTS SERVICE, COLUMBUS, OHIO, US; BISHOP, RICHARD TIMOTHY: "Control of the release of soil additives" retrieved from STN Database accession no. 96:212558 XP002227351 & ZA 8 005 769 A (REVERTEX (PTY.) LTD., S. AFR.) 26 August 1981 (1981-08-26)
- DATABASE WPI Section Ch, Week 199824 Derwent Publications Ltd., London, GB; Class A97, AN 1998-266956 XP002227353 & JP 10 087404 A (DAIICHI KOGYO SEIYAKU CO LTD), 7 April 1998 (1998-04-07)

## Description

THIS INVENTION relates to the application of an insecticide to a fabric material.

The application of an insecticide to a fabric material is required in relation to fabric materials used for tents, clothing items, bed nets, tsetse-fly traps, and the like, particularly where these items are used to provide personal protection against insects and where this protection can be enhanced by killing the insects. Although the invention as hereinafter referred to provides particularly for the application of an insecticide to a fabric material suitable to form a mosquito net, the invention as hereinafter defined must be interpreted to extend to all other applications which can benefit from the application of an insecticide to a fabric material, and to which parameters as hereinafter set out apply.

In relation to a mosquito net, the application of an insecticide to the fabric material forming the net must provide for the insecticide to remain bioavailable for killing targeted insects, particularly mosquitoes, over an extended time period and particularly after several "washes" of the material. In order to accommodate this requirement it is known to apply the insecticide with the aid of a binder that binds the insecticide to the fabric material, while permitting continuous release of the insecticide at a controlled rate, in order to provide for the required bioavailability of the insecticide.

By providing for the insecticide to be released continuously, the binder also allows the insecticide to be washed out. As such, the binders used to date for the above purpose have not proven satisfactory, insofar as the associated insecticides lose their capability to kill insects after a very limited number of washes, i.e. between three and twenty washes. Clearly, where a binder does not permit the insecticide to be washed out, the insecticide may not be released at a sufficient rate and non-bioavailability of the insecticide can thus occur. The objectives of insecticide release at a sufficient rate and insecticide retention, particularly during washing, clearly constitute objectives that are contra-facilitatory and do not appear achievable.

GB 2 202 243 discloses a method of treating textiles with a composition comprising ammonium polyphosphate, a polyvinyl acetate ethylene copolymer (binding agent), an insecticide and an anionic or nonionic surfactant which assists in dispersing ammonium polyphosphates over the surface to be treated. US 4 623 540 discloses a controlled release insecticide composition comprising a film-forming resin, e.g. a copolymer of styrene and 2-ethylhexyl acrylate and a surfactant which aids in the emulsification of the composition when they are added to water by providing adequate dispersion. JP 61015801 discloses a preparation for coating cloth or nonwoven cloth comprising an insecticide, an emulsion type resin such as ethylenevinyl acetate copolymer and a non-ionic or anionic surfactant. ZA 8 005 769 shows the release of agrochemicals is controlled by using a polymeric additive capable of imparting hydrophobicity e.g. a styrene-2-ethylhexylacrylate copolymer as well as a certain amount of wetting agent capable of reducing the hydrophobicity to a required degree.

It is thus an object of this invention to provide an alternative approach to the binding of an insecticide to a fabric material and, particularly, to provide an insecticide composition to which the above contra-facilitory objectives do not apply and which permits an insecticide to be bound to a fabric material in a manner in which bioavailability of the insecticide for killing insects is maintained after multiple washes, particularly in the order of fifty washes, or more.

According to the invention there is provided an insecticide composition for application to a fabric material, which composition comprises a mixture including
an insecticide;
a copolymeric binder in a liquid form that permits application of the composition to a fabric material and that, after drying and while the fabric material is dry, imparts hydrophobicity to the insecticide; and
a dispersing agent that, after application of the composition to a fabric and upon wetting of the fabric, reduces the hydrophobicity imparted to the insecticide by the binder to permit limited insecticide release, said dispersing agent is selected from the group including sodium silicates, polyphosphates and lignin derivatives

The insecticide of the insecticide composition may be either one of a single insecticide and a mixture of insecticides selected from a group of insecticides that is suitable for application to mosquito nets. This group of insecticides may include synthetic pyrethroids such as those known in the trade as Alphacypermethrin, Cyfluthrin, Deltamethrin, Etofenprox and Permethrin, other pyrethroids such as that known in the trade as Bifenthrin and non-pyrethroids such as that known in the trade as Carbosulphan. The insecticide also may be included in the insecticide composition as one of a water based insecticide concentrate and a solvent based insecticide concentrate, insecticide concentrates known in the trade as Cislin and K-Orthrine being considered suitable.

The insecticide forming part of the insecticide composition of the invention also may be selected from other groups suitable for different applications.

The copolymeric binder of the insecticide composition of the invention may be prepared as a copolymer emulsion that is derived by an emulsion polymerisation technique from monomers selected from at least one of the groups including:
a) vinyl esters of aliphatic acid having 1 - 18 carbon atoms, such as vinyl acetate and vinyl versatate;
b) acrylic and methacrylate esters of an alcohol having 1 - 18 carbon atoms, such as butyl acrylate, 2-ethylhexylacrylate, and methyl acrylate; and
c) mono and di-ethylenically unsaturated hydrocarbons, such as styrene, and aliphatic dienes, such as butadiene.

As such, the copolymeric binder, for use in the composition, may be prepared as a copolymer emulsion that is derived from monomers selected from the group including:
i) vinyl ester of versatic acid with butyl acrylate
ii) vinyl ester of versatic acid with 2-ethylhexylacrylate
iii) methylmethacrylate with 2-ethylhexylacrylate
iv) styrene with 2-ethylhexylacrylate
v) styrene with butadiene
vi) butadiene with acrylonitrile
vii) styrene with butylacrylate
viii) vinyl acetate with 2-ethylhexylacrylate

The copolymeric binder of the insecticide composition typically is a styrene 2-ethylhexylacrylate copolymer emulsion having a 50% total solids content prior to formulation as the insecticide composition for application to a fabric material.

The quantity of copolymeric binder may be variable and particularly is such that in relation to the quantity of insecticide forming part of the insecticide composition, it can impart required hydrophobicity to the insecticide, after application and drying of the composition on a fabric material. Various other monomers as listed above can be copolymerised to form copolymeric binders having the required properties needed to form the copolymeric binder component of the insecticide composition of the invention.

The dispersing agent as used in the insecticide composition of the invention comprises particularly a surface active agent that, with the insecticide composition applied to a fabric material, provides maximum separation of insecticide particles when the fabric is wetted. As such, the dispersing agent is a polymeric electrolyte selected from a group including sodium silicates, polyphosphates and lignin derivatives.

The specific dispersing agent selected may be determined by the particular polymeric binder to be used as part of the composition of the invention, considering particularly the hydrophilic properties of the dispersing agent and the hydrophobic properties of the copolymeric binder.

It must be understood that the components of the insecticide composition of the invention can be separately provided, or can be provided in different combinations, requiring mixing and/or dilution before application. The invention accordingly extends also to the individual components when provided specifically to form the insecticide composition of the invention.

The insecticide composition of the invention may be applied to fabric materials before their formation into required products, i.e. while still in a yarn or sheet form, or after formation of relevant products.

Typical fabrics to which the insecticide composition of the invention may be applied may include the fabric materials commonly used for products such as tents, mosquito nets, and the like. As such, the insecticide composition of the invention may be particularly suitable for application to polyester netting as used for mosquito nets.

The insecticide composition of the invention may include also an adjuvant that, in use when applied as part of the insecticide composition to a fabric material, can serve to overcome resistance of particular insects to the insecticide included in the composition. As such, with the insecticide known in the trade as Deltamethrin being included in the insecticide composition, for killing particular type mosquitoes, the adjuvant may be piperonyl butoxide.

The insecticide composition of the invention may include also an anti-foam agent. Particularly, the anti-foam agent is a silicone anti-foam agent.

Still further, the insecticide composition of the invention may include UV blockers for protecting UV sensitive insecticides, as well as a disclosing agent that can serve to identify when a fabric to which the composition has been applied, requires application of fresh insecticide composition. The disclosing agent may be of a type that identifies when a fabric to which the composition has been applied requires fresh application of fresh insecticide composition by colour variations.

Further according to the invention there is provided, in combination, an insecticide composition in accordance with the present invention and a mosquito net of a fabric material, the insecticide composition being applied to the fabric material forming the mosquito net.

A particular example of an insecticide composition which is suitable for use in the treatment of polyester netting as used for mosquito nets is described hereafter, as well as the mode of use of the insecticide composition and the mode of release of the insecticide forming part of the composition, following application of the composition to a mosquito net.

The insecticide composition, suitable for use in the treatment of polyester netting as used for mosquito nets, in accordance with the invention, particularly includes
as insecticide 1,0 parts dry microcrystalline Deltamethrin;
as a copolymeric binder 25.0 parts wet styrene 2-ethylhexylacrylate copolymer emulsion at 50% total solids content;
as dispersing agent 73,5 parts wet 20% solution of sodium hexametaphosphate; and
1,5 parts wet silicone anti-foam agent at 20% solids content.

The insecticide composition is thus provided in a wet form in which it can be conveniently applied to the polyester netting to be treated, typically by a conventional application process such as by dipping, spraying, brushing, and the like. Following the application of the insecticide composition to the polyester netting it is allowed to dry, the copolymeric binder imparting sufficient hydrophobicity to the insecticide to prevent effectively the release of the insecticide from the composition as applied, i.e. from the netting, while retained in a dry form. Upon wetting of the netting, the dispersing agent will reduce the hydrophobicity imparted to the insecticide, permitting limited release of the insecticide, effectively to the surface of the composition as applied to the polyester netting and, as such, effectively to the surface of the polyester netting. The quantity of insecticide so released particularly will be determined by the quantity of dispersing agent included in the insecticide composition.

It must be understood specifically in the above regard that by the suitable selection of a copolymeric binder and a dispersing agent, a precalculated and precisely controlled rate of insecticide release, as governed and maintained by the specific chemical reaction kinetics of that release, can be provided for. The chemical reaction kinetics may be particularly predetermined by virtue of being preset by the intimate contact of the types, amounts and proportions of the chemical reagents specifically selected to make up the composition. Different conditions and requirements can thus be taken into account in order to accommodate the formulation of the insecticide composition.

In use of a mosquito net, formed of polyester netting treated with the insecticide composition of the invention, the insecticide available on the surface of the polyester netting will fulfil the purpose of killing mosquitoes for as long sufficient insecticide is "exposed". By the normal washing of a treated mosquito net, the washing process will provide for additional insecticide to be released from the composition as applied to the mosquito net, thus rendering the net effective for killing mosquitoes for an additional time period.

By controlling the rate of release of the insecticide, the Applicants have established that the mosquito net can remain effective for killing mosquitoes even after fifty washes carried out in accordance with the World Health Organization Standard Methods.

Different insecticides, as well as both water-based and solvent based insecticide concentrates, can be utilized for different treatment applications, whereas different copolymeric binders also exist that are suitable for the purpose described and that can be used in combination with particular dispersing agents to provide for the required controlled release of the insecticide utilized, as described above. It is envisaged in this regard also that different fabric materials could be treated with different compositions, particularly to take into account the different applications of such materials and the different forms of protection to be provided by such materials.

Two particular alternative insecticide compositions for the purpose herein envisaged are as follows:

### Composition 1

| Soln 1: | A | Dispersant | |
|---|---|---|---|
| | | White spirits | 92.60% (m/m) |
| | | Phosphatides in form of soya lecithin | 0.74% |

| | B | Monomer/Copolymer Binder | |
|---|---|---|---|
| | | Styrene-2ethylhexylacrylate | 0.19% |

| Soln 2: | C | Insecticide | |
|---|---|---|---|
| | | Acetone | 2.52% |
| | | Deltamethrin | 0.15% |
| | | White Spirits | 3.80% |
| | | | |
| | | Total | 100.00% |

### Composition 2

| Soln 1: | A | Dispersant | |
|---|---|---|---|
| | | White spirits | 46.08% |
| | | Phosphatides in form of soya lecithin | 0.37% |
| | | | |

| | B | Surfactant | |
|---|---|---|---|
| | | Synperonic NP9 | 0.15% |

| | C | Monomer/Copolymer Binder | |
|---|---|---|---|
| | | Styrene-2ethylhexylacrylate | 0.10% |
| | | | |

| Soln 2: | D | Insecticide | |
|---|---|---|---|
| | | Acetone | 1.25% |
| | | Deltamethrin | 0.15% |
| | | White Spirits | 1.90% |
| | | | |

| Soln 3: | E | Emulsifying Medium | |
|---|---|---|---|
| | | Water | 49.85% |
| | | Synperonic NP9 | 0.15% |
| | | | |
| | | Total | 100.00% |

The insecticide composition as described above also may include UV blockers for protecting insecticides that could be exposed to deterioration as a result of UV radiation, whereas a disclosing agent also can form a part of the composition. The disclosing agent may be of a type that can indicate when re-treatment of a fabric material is necessary, the insecticide composition of the invention clearly being suitable to permit the multiple treatment of fabric materials.

The invention extends also to particular fabric materials treated with an insecticide composition, in accordance with the invention, as well as to particular products and, particularly, mosquito nets, formed of fabric materials treated with, or rendered suitable for treatment with, the insecticide composition of the invention.

## Claims

1. An insecticide composition for application to a fabric material comprising a mixture including
an insecticide;
a copolymeric binder in a liquid form that permits application of the composition to a fabric material and that, after drying and while the fabric material is dry, imparts hydrophobicity to the insecticide; and
a dispersing agent that, after application of the composition to a fabric and upon wetting of the fabric, reduces the hydrophobicity imparted to the insecticide by the binder to permit limited insecticide release, said dispersing agent is a polymeric electrolyte selected from the group including sodium silicates, polyphosphates and lignin derivatives.

2. An insecticide composition as claimed in Claim 1, in which the insecticide is either one of a single insecticide and a mixture of insecticides selected from a group of insecticides that is suitable for application to mosquito nets.

3. An insecticide composition as claimed in Claim 2, in which the group of insecticides includes synthetic pyrethroids such as those known in the trade as Alphacypermethrin, Cyfluthrin, Deltamethrin, Etofenprox and Permethrin, other pyrethroids such as that known in the trade as Bifenthrin and non-pyrethroids such as that known in the trade as Carbosulphan.

4. An insecticide composition as claimed in any one of Claims 1 to 3, in which the insecticide is included as one of a water-based insecticide concentrate and a solvent based insecticide concentrate.

5. An insecticide composition as claimed in any one of the preceding claims, in which the copolymeric binder for use in the composition is prepared as a copolymer emulsion that is derived by an emulsion polymerisation technique from monomers selected from at least one of the groups including:
a) vinyl esters of aliphatic acid having 1-18 carbon atoms, such as vinyl acetate and vinyl versatate;
b) acrylic and methacrylate esters of an alcohol having 1-18 carbon atoms, such as butyl acrylate, 2-ethylhexylacrylate, and methyl acrylate; and
(c) mono and di-ethylenically unsaturated hydrocarbons, such as styrene and aliphatic dienes such as butadiene

6. An insecticide composition as claimed in Claim 5, in which the copolymeric binder, for use in the composition, is prepared as a copolymer emulsion that is derived from monomers selected from the group including :
i) vinyl ester of versatic acid with butyl acrylate;
ii) vinyl ester of versatic acid with 2-ethylhexylacrylate;
iii) methylmethacrylate with 2-ethylhexylacrylate;
iv) styrene with 2-ethylhexylacrylate;
v) styrene with butadiene;
vi) butadiene with acrylonitrile;
vii) styrene with butylacrylate; and
viii) vinyl acetate with 2-ethylhexylacrylate.

7. An insecticide composition as claimed in Claim 6, in which the copolymeric binder is a styrene 2-ethylhexylacrylate copolymer emulsion having a 50% total solids content prior to formulation as the insecticide composition for application to a fabric material.

8. An insecticide composition as claimed in any one of the preceding claims, in which the dispersing agent comprises a surface active agent that, with the insecticide composition applied to a fabric material, provides maximum separation of insecticide particles when the fabric material is wetted.

9. An insecticide composition as claimed in any one of the preceding claims, which includes an adjuvant that, in use when applied as part of the insecticide composition to a fabric material, can serve to overcome resistance of particular insects to the insecticide included in the composition.

10. An insecticide composition as claimed in Claim 9, in which the insecticide is the insecticide known in the trade as Deltamethrin, which is provided for killing particular type mosquitoes, and the adjuvant is piperonyl butoxide.

11. An insecticide composition as claimed in any one of the preceding claims, in which the mixture forming the composition includes an anti-foam agent.

12. An insecticide composition as claimed in Claim 11, in which the anti-foam agent is a silicone anti-foam agent.

13. An insecticide composition as claimed in any one of the preceding claims, in which the mixture forming the insecticide includes UV blockers.

14. An insecticide composition as claimed in any one of the preceding claims, in which the mixture forming the composition includes a disclosing agent that can serve to identify when a fabric to which the composition has been applied requires application of fresh composition.

15. An insecticide composition as claimed in Claim 1, which comprises a mixture including
as insecticide 1,0 parts dry microcrystalline Deltamethrin;
as a copolymeric binder 25.0 parts wet styrene 2-ethylhexylacrylate copolymer emulsion at 50% total solids content;
as dispersing agent 73,5 parts wet 20% solution of sodium hexametaphosphate; and
1,5 parts wet silicone anti-foam agent at 20% solids content.

16. In combination an insecticide composition as claimed in any one of Claims 1 to 15 and a mosquito net of a fabric material, the insecticide composition being applied to the fabric material forming the mosquito net.

## Patentansprüche

1. Insektizidzusammensetzung zur Applikation auf ein Gewebematerial, wobei die Zusammensetzung ein Gemisch umfasst, enthaltend
ein Insektizid,
ein copolymeres Bindemittel in flüssiger Form, das die Applikation der Zusammensetzung auf ein Gewebematerial erlaubt und das nach dem Trocknen und während das Gewebematerial trocken ist, dem Insektizid Hydrophobie verleiht, und
ein Dispergiermittel, das nach Applikation der Zusammensetzung auf ein Gewebe und beim nass machen des Gewebes die Hydrophobie reduziert, die dem Insektizid über das Bindemittel verliehen worden ist, so dass eine begrenzte Insektizidfreisetzung ermöglicht wird, wobei das Dispergiermittel ein polymerer Elektrolyt ist, ausgewählt aus der Gruppe, die Natriumsilicate, Polyphosphate und Ligninderivate enthält.

2. Insektizidzusammensetzung nach Anspruch 1, in der das Insektizid entweder ein einzelnes Insektizid oder ein Gemisch von Insektiziden ist, ausgewählt aus einer Gruppe aus Insektiziden, die zur Applikation auf Moskitonetze geeignet sind.

3. Insektizidzusammensetzung nach Anspruch 2, in der die Gruppe der Insektizide synthetische Pyrethroide wie die im Handel bekannten Pyrethroide Alphacypermethrin, Cyfluthrin, Deltamethrin, Etofenprox und Permethrin, andere Pyrethroide wie die im Handel bekannten Pyrethroide Bifenthrin und Nichtpyrethroide wie das im Handel bekannte Nichtpyrethroid Carbosulfan einschließt.

4. Insektizidzusammensetzung nach einem der Ansprüche 1 bis 3, in der das Insektizid als Insektizidkonzentrat auf Wasserbasis oder Insektizidkonzentrat auf Lösungsmittelbasis enthalten ist.

5. Insektizidzusammensetzung nach einem der vorangehenden Ansprüche, in der das copolymere Bindemittel zum Einsatz in der Zusammensetzung als Copolymeremulsion hergestellt wird, die über eine Emulsionspolymerisationstechnik erhalten wird, ausgehend von Monomeren, ausgewählt aus mindestens einer Komponente der Gruppe, umfassend
a) Vinylester aliphatischer Säuren mit 1 bis 18 Kohlenstoffatomen wie Vinylacetat und Vinylversatat,
b) Acryl- und Methacrylsäureester eines Alkohols mit 1 bis 18 Kohlenstoffatomen wie Butylacrylat, 2-Ethylhexylacrylat und Methylacrylat, und
c) Mono- und diethylenisch ungesättigte Kohlenwasserstoffe wie Styrol und aliphatische Diene wie Butadien.

6. Insektizidzusammensetzung nach Anspruch 5, in der das copolymere Bindemittel zum Einsatz in der Zusammensetzung als Copolymeremulsion hergestellt wird, die aus Monomeren erhalten wird, ausgewählt aus der Gruppe, umfassend
i) Vinylester der Versaticsäure mit Butylacrylat,
ii) Vinylester der Versaticsäure mit 2-Ethylhexylacrylat,
iii) Methylmethacrylat mit 2-Ethylhexylacrylat,
iv) Styrol mit 2-Ethylhexylacrylat,
v) Styrol mit Butadien,
vi) Butadien mit Acrylnitril,
vii) Styrol mit Butylacrylat und
viii) Vinylacetat mit 2-Ethylhexylacrylat.

7. Insektizidzusammensetzung nach Anspruch 6, in der das copolymere Bindemittel eine Styrol/2-Ethylhexylacrylat-Copolymeremulsion ist, die vor der Formulierung einen Gesamtgehalt an Festkörpern von 50 % aufweist als Insektizidzusammensetzung zur Applikation auf ein Gewebematerial.

8. Insektizidzusammensetzung nach einem der vorangehenden Ansprüche, in der das Dispergiermittel ein oberflächenaktives Mittel enthält, das zusammen mit der Insektizidzusammensetzung, die auf das Gewebematerial appliziert wird, eine maximale Abscheidung der Insektizidpartikel bewirkt, wenn das Gewebematerial nass gemacht wird.

9. Insektizidzusammensetzung nach einem der vorangehenden Ansprüche, die ein Adjuvans enthält, das bei Verwendung als Teil der Insektizidzusammensetzung bei Applikation auf ein Gewebematerial helfen kann, die Widerstandsfähigkeit bestimmter Insekten gegen das in der Zusammensetzung enthaltene Insektizid zu überwinden.

10. Insektizidzusammensetzung nach Anspruch 9, in der das Insektizid das im Handel bekannte Insektizid Deltamethrin ist, das zum Töten bestimmter Moskitoarten bereitgestellt wird und worin das Adjuvans Piperonylbutoxid ist.

11. Insektizidzusammensetzung nach einem der vorangehenden Ansprüche, in der das Gemisch, das die Zusammensetzung bildet, ein Schaumverhinderungsmittel enthält.

12. Insektizidzusammensetzung nach Anspruch 11, in der das Schaumverhinderungsmittel ein Silcon-Schaumverhinderungsmittel ist.

13. Insektizidzusammensetzung nach einem der vorangehenden Ansprüche, in der das das Insektizid enthaltende Gemisch UV-Blocker enthält.

14. Insektizidzusammensetzung nach einem der vorangehenden Ansprüche, in der das die Zusammensetzung enthaltende Gemisch einen Botenstoff enthält, der zur Identifizierung dienen kann, wann ein Gewebe, auf das die Zusammensetzung appliziert worden ist, die Applikation einer frischen Zusammensetzung benötigt.

15. Insektizidzusammensetzung nach Anspruch 1, umfassend ein Gemisch, enthaltend
als Insektizid 1,0 Teile trockenes mikrokristallines Deltamethrin,
als copolymeres Bindemittel 25,0 Teile nasse Styrol-2-Ethylhexylacrylatcopolymer-Emulsion bei 50 %igen Gesamtfeststoffgehalt,
als Dispergiermittel 73,5 Teile nasse 20 %ige Lösung Natriumhexametaphosphat, und
1,5 Teile nasses Silicon-Schaumverhinderungsmittel mit 20 %igem Feststoffgehalt enthält.

16. In Kombination eine Insektizidzusammensetzung nach einem der Ansprüche 1 bis 15 und ein Moskitonetz aus einem Gewebematerial, wobei die Insektizidzusammensetzung auf das Gewebematerial unter Bildung des Moskitonetzes appliziert wird.

## Revendications

1. Composition insecticide à appliquer sur un matériau textile, comprenant un mélange de :
un insecticide,
un liant copolymère sous forme liquide, qui permet l'application de la composition sur un matériau textile et qui, après séchage et lorsque le matériau textile est sec, confère un caractère hydrophobe à l'insecticide, et
un agent de dispersion, qui après application de la composition sur le textile et par mouillage du textile, réduit le caractère hydrophobe conféré à l'insecticide par le liant, pour permettre une libération limitée de l'insecticide, ledit agent de dispersion est un électrolyte polymère choisi parmi le groupe comprenant les silicates de sodium, les polyphosphates et des dérivés de la lignine.

2. Composition insecticide selon la revendication 1, dans laquelle l'insecticide est un seul insecticide ou un mélange d'insecticides choisis parmi un groupe d'insecticides, qui est approprié pour une application sur des moustiquaires.

3. Composition insecticide selon la revendication 2, dans laquelle le groupe d'insecticides comprend les pyréthroïdes synthétiques comme ceux connus sous les marques Alphacyperméthrine, Cyfluthrine, Deltaméthrine, Etofenprox et Perméthrine, d'autres pyréthroïdes comme ceux connus sous la marque Bifenthrine et des non-pyréthroïdes comme ceux connus sous la marque Carbosulphan.

4. Composition insecticide selon l'une quelconque des revendications 1 à 3, dans laquelle l'insecticide est incorporé sous forme d'un concentré insecticide à base d'eau et d'un concentré insecticide à base de solvant.

5. Composition insecticide selon l'une quelconque des revendications précédentes, dans laquelle le liant copolymère à utiliser dans la composition est préparée sous forme d'une émulsion copolymère, qui dérive d'une technique de polymérisation en émulsion à partir de monomères choisis parmi au moins un des groupes suivants :
a) des esters vinyliques d'acide aliphatique ayant 1-18 atomes de carbone, comme l'acétate de vinyle et le versatate de vinyle ;
b) des esters acrylate et méthacrylate d'alcools ayant 1-18 atomes de carbone, comme l'acrylate de butyle, l'acrylate de 2-éthylhexyle et l'acrylate de méthyle, et
c) des hydrocarbures mono- ou diéthyléniquement insaturés, comme le styrène et des diènes aliphatiques comme le butadiène.

6. Composition insecticide selon la revendication 5, dans laquelle le liant copolymère, à utiliser dans la composition, est préparé sous forme d'une émulsion copolymère, qui dérive des monomères choisis parmi le groupe :
i) ester vinylique de l'acide versatique avec acrylate de butyle ;
ii) ester vinylique de l'acide versatique avec acrylate de 2-éthylhexyle ;
iii) méthacrylate de méthyle avec acrylate de 2-éthylhexyle ;
iv) styrène avec acrylate de 2-éthylhexyle ;
v) styrène avec butadiène ;
vi) butadiène avec acrylonitrile ;
vii) styrène avec acrylate de butyle, et
viii) acétate de vinyle avec acrylate de 2-éthylhexyle.

7. Composition insecticide selon la revendication 6, dans laquelle le liant copolymère est une émulsion copolymère styrène-acrylate de 2-éthyl-hexyle, ayant une teneur totale en matières solides de 50% avant formulation comme une composition insecticide à appliquer sur un matériau textile.

8. Composition insecticide selon l'une quelconque des revendications précédentes, dans laquelle l'agent dispersant comprend un agent tensioactif, qui avec la composition insecticide appliquée sur un matériau textile, procure une séparation maximale des particules d'insecticide lorsque la matériau textile est mouillé.

9. Composition insecticide selon l'une quelconque des revendications précédentes, qui comprend un adjuvant, qui lors de l'utilisation lorsqu'il est appliqué comme partie d'une composition insecticide sur un matériau textile, peut servir à surmonter la résistance d'insectes particuliers à l'insecticide incorporé dans la composition.

10. Composition insecticide selon la revendication 9, dans laquelle l'insecticide est l'insecticide connu sous la marque Deltaméthrine, qui est procuré pour tuer un type particulier de moustiques, et l'adjuvant est le butoxyde de pipéronyle.

11. Composition insecticide selon l'une quelconque des revendications précédentes, dans laquelle le mélange formant la composition comprend un agent anti-mousse.

12. Composition insecticide selon la revendication 11, dans laquelle l'agent anti-mousse est un agent anti-mousse silicone.

13. Composition insecticide selon l'une quelconque des revendications précédentes, dans laquelle le mélange formant l'insecticide comprend un agent bloquant les U.V..

14. Composition insecticide selon l'une quelconque des revendications précédentes, dans laquelle le mélange formant la composition comprend un agent de révélation, qui peut servir à déterminer lorsqu'un tissu sur lequel la composition a été appliquée, nécessite l'application de composition fraîche.

15. Composition insecticide selon la revendication 1, qui comprend un mélange de :
comme insecticide, 1,0 partie de Deltaméthrine microcristalline sèche ;
comme liant copolymère, 25,0 parties d'émulsion humide de copolymère styrène-acrylate de 2-éthylhexyle à une teneur totale en matières solides de 50% ;
comme agent de dispersion, 73,5 parties d'une solution humide à 20% d'hexamétaphosphate de sodium ; et
1,5 partie d'agent anti-mousse silicone humide à une teneur en matières solides de 20%.

16. Combinaison d'une composition insecticide selon l'une quelconque des revendications 1 à 15 et d'un moustiquaire en un matériau textile, la composition insecticide étant appliquée sur le matériau textile formant le moustiquaire.
